# FASCICULE DE BREVET EUROPEEN

(11) **EP 0 672 630 B1**
(45) Date de publication et mention de la délivrance du brevet: **10.06.1998**
(21) Numéro de dépôt: 95400526.0
(22) Date de dépôt: 13.03.1995
(51) Int. Cl.: C03C 8/14, C04B 41/86

(54) **Revêtement haute température sur substrat céramique et procédé ne nécessitant pas de cuisson pour son obtention**
Hochtemperaturüberzug auf keramischem Substrat und Verfahren zu seiner Herstellung ohne Brand
High temperature coating on ceramic substrate and process for its production without necessary curing

(30) Priorité: 16.03.1994 FR 9403048
(43) Date de publication de la demande: 20.09.1995
(73) Titulaire: AEROSPATIALE Société Nationale Industrielle, 75781 Paris Cédex 16 (FR); VIAM ALL Russian Institut of Aviation Materials, 107005 Moscou (RU)
(72) Inventeur: Sémenova, Elena Vassilievna, 107113 Moscou (RU); Tjurin, Vladimir Mihailovich, 129515 Moscou (RU); Solntsev, Stanislav Serguevich, 115558 Moscou (RU); Bersenev, Alexei Yurievich, 119361 Moscou (RU)
(74) Mandataire: Lepeudry-Gautherat, Thérèse

(56) Documents cités:
- US-A- 5 079 082
- DATABASE WPI Section Ch, Week 8813 Derwent Publications Ltd., London, GB; Class L, AN 88-090257 & SU-A-1 331 846 (I.B.BANKOVSKAY ET AL.) , 23 Août 1987

## Description

La présente invention concerne des composites résistant aux hautes températures, appelés ci-après "composites hautes températures", et plus particulièrement des revêtements à base d'une matrice céramique, vitrocéramique ou vitreuse, et de fibres et/ou trichites ou whiskers réfractaires à haute résistance.

De tels revêtements sont largement utilisés dans des systèmes de protection thermique pour les aéronefs aérospatiales et hypersoniques.

On connaît des revêtements poreux dits TUFI (Toughened Unipiece Fibrous Insulation : isolation fibreuse d'une seule pièce, durcie) utilisés pour l'isolation thermique, qui comprennent du verre RCG (Reaction Cured Glass : verre traité par réaction ; recherche de NASA Research Center) à base de borosilicate à haute teneur en silice (77,5 % en poids), du tétraborure de silicium (2,5 % en poids) et du disiliciure de molybdène (20 % en poids) (D.B. Laiser et coll., Advanced Porous Coating for low-density Ceramic Insulation Materials, J. Amer. Ceram. Soc., vol. 72, n° 6, pages 1003-1010, 1989). Comme substrat céramique est utilisé un matériau de type AETB (Alumina Enhanced Thermal Barrier : barrière thermique améliorée par de l'alumine) qui comprend des fibres de silice (SiO₂) amorphe (40 à 85 % poids), des fibres d'aluminoborosilicate (10 % en poids) et des fibres d'alumine (5 à 50 % en poids). Le revêtement est préparé par des techniques de revêtement par barbotine et cuisson, comprenant un broyage fin desdits composants, leur mélange avec de l'éthanol en tant que support, l'application de la barbotine ainsi obtenue à la surface du substrat par pulvérisation en utilisant un pistolet de projection, le séchage et la cuisson du revêtement à 1220°C.

Un inconvénient de ce revêtement sur un substrat céramique réside dans sa faible température de service, à savoir 1260°C. Dans un plasma d'air, à une température supérieure à 1400°C, il s'y forme des bulles ou des cloques.

On connaît également des revêtements à base de matériaux céramiques à haute teneur en alumine qui comprennent de 80 à 95 % en poids de verre de type aluminoborosilicate, la composition (% en poids) du verre étant :
- B₂O₃ 17 à 28
- Al₂O₃ 3 à 11
- SiO₂ complément
et 5 à 20 % en poids d'oxyde d'aluminium fibreux sous forme de monocristaux (trichites ou whiskers d'Al₂O₃) [M. V. Sazonova et coll., Coating composition, certificat d'auteur SU 1 331 846 (classification CO3 c 8/24), déposé le 21 juin 1985 et publié le 23 août 1987 (bulletin n° 31)].

Le revêtement est préparé par des techniques de revêtement par barbotine et cuisson.

La barbotine est préparée en utilisant une solution à 50 % d'éthanol dans l'eau et est appliquée sur un matériau poreux par brossage au moyen d'un pinceau, ou par pulvérisation au moyen d'un pistolet de projection. Le matériau revêtu est séché à une température de 100 à 150°C, puis cuit à une température de 1300 à 1350°C pendant 5 à 15 minutes.

Un inconvénient de ce revêtement sur substrat céramique fibreux est sa faible résistance à l'érosion. Dans un courant d'air à une température de 1300 à 1350°C, l'ablation est de 0,2 à 0,4 g/m².

Pour former des revêtements ayant une température de service plus élevée, il est nécessaire d'utiliser des matériaux à base d'oxydes plus réfractaires. Il est en même temps nécessaire d'assurer l'absence de retrait et de distorsions du substrat céramique fibreux pendant la formation du revêtement.

Ces problèmes peuvent être surmontés en utilisant une technologie sol-gel qui permet de développer des revêtements protecteurs à base d'oxydes réfractaires tels que SiO₂, Al₂O₃, ZrO₂ etc sur des substrats en verre, en céramique ou en métal.

Le procédé de réalisation de revêtements utilisant la technologie sol-gel comprend les étapes consistant à préparer une solution de composés organo-métalliques comprenant en particulier des alcoxydes, que l'on peut soumettre à une gélification de manière contrôlée, à appliquer cette solution sur un substrat, habituellement par immersion du substrat dans la solution et retrait du substrat de cette solution à une vitesse uniforme, parfaitement contrôlée, à sécher lentement le gel résultant pour former une pellicule poreuse et à la densifier ensuite par chauffage à des températures de 200 à 700°C.

Ce procédé permet d'obtenir une couche à un ou plusieurs composants qui confère des propriétés spécifiques à la surface à revêtir.

Toutefois, en utilisant uniquement des solutions de composés organo-métalliques ou sols, il est impossible d'obtenir un revêtement continu ou faiblement poreux à la surface d'un matériau très poreux.

Ce problème peut être surmonté grâce à l'introduction dans le sol d'une charge en poudre qui forme le squelette du revêtement.

On connaît un revêtement dit "C-9", élaboré par la société américaine Rockwell Intern. Space Transportation Systems Div., pour l'isolation souple de type AFRSI (Advanced Flexible Reusable Surface Insulation : isolation de surface réutilisable, souple, perfectionnée), à base de fibres de silice et comprenant 47 % en poids de silice colloïdale et 53 % en poids de silice broyée (en poudre).

Ce revêtement est préparé en appliquant à la surface du matériau fibreux un mélange de sol de silice colloïdale (Ludox® A.S. de Du Pont de Nemours) et de poudre de silice amorphe, dans lequel est ajouté de l'alcool isopropylique pour conférer une meilleure mouillabilité à la surface du matériau fibreux [D. Mui, H.M. Clancy, Development of a Protective Ceramic Coating for Shuttle Orbiter Advanced Flexible Reusable Surface Insulation (AFRSI), Ceram. Eng. Sci. Proc., vol. 6, n^{os} 7-8, pages 793-805, 1985].

Le revêtement "C-9" qui comprend de la silice amorphe, présente un faible coefficient de dilatation thermique mais, en raison de la présence de silice, il n'est compatible qu'avec un substrat à base de fibres de quartz. En outre, aux températures supérieures à 1000°C, la silice amorphe, en l'absence d'un inhibiteur de cristallisation tel que par exemple le bore, a tendance à cristalliser en formant de la cristobalite, ce qui conduit à une diminution de la tenue en température.

L'invention a par conséquent pour but de fournir un revêtement haute température, faiblement poreux, sur un substrat poreux à base de fibres céramiques constituées de composés réfractaires, qui présente une température de service pouvant aller jusqu'à 1500°C.

Un autre but de l'invention est de fournir un procédé ne nécessitant pas de cuisson, pour obtenir un revêtement haute température présentant les propriétés susindiquées.

Selon l'un de ses aspects, l'invention fournit un revêtement haute température, faiblement poreux, sur un substrat poreux à base de fibres céramiques constituées de composés réfractaires, caractérisé en ce que :
- il est essentiellement constitué de silice (SiO₂) provenant d'un sol de silice, et d'alumine (Al₂O₃), de carbure de silicium (SiC) et de disiliciure de molybdène (MoSi₂) résultant du mélange de particules de ces composés avec le sol de silice, dans une barbotine ;
- il a la composition en poids suivante :

| | |
|---|---|
| SiO₂ | 30,8 à 41,9 % |
| Al₂O₃ | 30,2 à 49,4 % |
| SiC | 4,0 à 16,3 % |
| MoSi₂ | 11,6 à 16,6 % ; |

- il présente une émittance non inférieure à 0,8 ; et
- il a une température de service allant jusqu'à 1500°C.

Selon un autre de ses aspects, l'invention a pour objet un procédé pour l'obtention du revêtement défini ci-dessus, caractérisé en ce qu'il est mis en oeuvre sans étape de cuisson et comprend essentiellement les étapes consistant à :
a) préparer une barbotine constituée de 65 à 75 % en poids d'un sol de silice ayant une teneur de 20 à 50 % en poids de SiO₂, et de 25 à 35 % en poids d'un mélange de particules des composés réfractaires Al₂O₃, SiC et MoSi₂, dans les proportions en poids suivantes :

| | |
|---|---|
| Al₂O₃ | 52 à 71 % |
| SiC | 6 à 28 % |
| MoSi₂ | 20 à 25 % ; |

b) appliquer ladite barbotine sur le substrat poreux à base de fibres céramiques à revêtir ;
c) sécher la couche appliquée en plusieurs étapes, à la température ambiante (20 à 25°C environ), à une température de 90 à 100°C puis à une température de 200 à 220°C jusqu'à l'obtention d'un poids constant du substrat revêtu.

Les composants de la barbotine, autres que la silice, peuvent être utilisés sous forme de trichites ou whiskers, de fibres, de poudres, ou de leurs mélanges.

Les avantages du matériau composite de revêtement selon l'invention sont notamment une initiation de la déformation à température élevée (au-dessus de 1100°C), une résistance thermochimique et une résistance à l'érosion élevées dans un plasma d'air à une température de surface allant jusqu'à 1500°C et une émittance élevée, c'est-à-dire supérieure ou égale à 0,8. Ces caractéristiques permettent d'utiliser, avec un tel revêtement, un substrat fibreux, poreux en tant que matériau isolant pour des aéronefs aérospatiales et des aéronefs hypersoniques.

Un autre avantage de l'invention réside dans la possiblité de former le revêtement en question selon une technique sans cuisson, ce qui permet, si nécessaire, de revêtir directement une aéronef.

Selon l'invention, le substrat céramique peut être choisi dans le groupe constitué par les céramiques fibreuses hautement poreuses, notamment à base d'oxydes de silicium, d'aluminium, de zirconium, de carbure de silicium, de nitrure de silicium, ou de mélanges de tels composants.

Le sol de silice est utilisé comme milieu dispersant pour la barbotine à partir de laquelle une matrice de revêtement haute température est formée, par formation de gel de SiO₂, puis densifiée et déshydratée par un processus de séchage. La diminution de la teneur en sol de SiO₂ dans la barbotine jusqu'à moins de 65 % en poids conduit à un épaississement et à la formation d'un revêtement non uniforme sur le substrat céramique, ce qui peut provoquer une fissuration du revêtement et son écaillement partiel. Par ailleurs, l'augmentation de la teneur en sol jusqu'à plus de 75 % en poids conduit à une imprégnation non uniforme de la surface du substrat par la barbotine liquide, c'est-à-dire à une diminution de la quantité de revêtement.

Les particules d'alumine forment le squelette du revêtement haute température et subissent l'essentiel des contraintes lorsque celui-ci est en service.

L'augmentation de la teneur en Al₂O₃ dans la barbotine jusqu'à plus de 71 % en poids et sa diminution jusqu'à moins de 52 % en poids conduisent à une diminution des propriétés mécaniques du revêtement sur le substrat céramique en raison du non-respect du rapport matrice-charge.

Le carbure de silicium améliore la stabilité de la barbotine vis-à-vis de la sédimentation et améliore également la liaison du squelette du revêtement composite et ses propriétés mécaniques. Une augmentation de la teneur en SiC jusqu'à plus de 28 % en poids conduit à une viscosité excessive de la barbotine et empêche son application sur un substrat céramique. Une diminution de la teneur en SiC dans la barbotine conduit à une réduction de la stabilité vis-à-vis de la sédimentation.

Le disiliciure de molybdène confère une émittance élevée au revêtement sur substrat céramique. Une diminution de sa teneur dans la barbotine jusqu'à moins de 20 % en poids conduit à une réduction de l'émittance du revêtement. Par ailleurs, une augmentation de la teneur en MoSi₂ jusqu'à plus de 25 % en poids dans la barbotine conduit à sa séparation en couches aux dépens d'une couche homogène de densité élevée.

Les exemples suivants sont destinés à mieux expliquer l'invention.

### Exemple 1 :

59 parties en poids de Al₂O₃ en poudre, 25 parties en poids de MoSi₂ en poudre et 16 parties en poids de SiC en poudre sont introduites dans un récipient en polyéthylène avec des billes d'alumine et mélangées pendant 2 heures dans un moulin à cylindres annulaires. 32 parties en poids des composants mélangés sont placées dans un récipient en verre, additionnées de 68 parties en poids de sol de SiO₂ ayant une teneur en SiO₂ de 34 % en poids, puis mélangées au moyen d'un agitateur magnétique, pendant 15 minutes, jusqu'à la formation d'une barbotine uniforme. La barbotine obtenue est appliquée à la surface d'un matériau céramique fibreux à base de fibres de Al₂O₃. Le produit revêtu est soumis à un séchage à la température ambiante pendant 2 heures, puis à un séchage à une température de 90 à 100°C pendant 2 heures et enfin à une température de 200 à 220°C jusqu'à ce que le poids du produit ne change plus.

### Exemple 2 :

Les quantités suivantes de composants de revêtement : 71 parties en poids de Al₂O₃ sous forme de fibres, 23 parties en poids de MoSi₂ en poudre, et 6 parties en poids de SiC en poudre, sont mélangées suivant le processus de l'exemple 1. 35 parties en poids des composants du mélange et 65 parties en poids de sol de SiO₂ ayant une teneur en SiO₂ de 30 % en poids sont mélangées dans un récipient en verre, comme dans l'exemple 1. On applique ensuite le mélange résultant sur la surface d'un article en matériau céramique poreux à base de trichites ou whiskers de SiC. Le séchage est effectué comme dans l'exemple 1.

### Exemple 3 :

Les quantités suivantes de composants de revêtement : 52 parties en poids de Al₂O₃ en poudre, 20 parties en poids de MoSi₂ en poudre et 28 parties en poids de SiC sous forme de trichites ou whiskers, sont mélangées comme dans l'exemple 1. 25 parties en poids des composants du mélange et 75 parties en poids de sol de SiO₂ ayant une teneur en SiO₂ de 20 % en poids sont mélangées comme dans l'exemple 1 et appliquées sur la surface d'un matériau à base de trichites ou whiskers de Si₃N₄. Le produit revêtu est séché à la température ambiante pendant 3 heures, puis à une température de 90 à 100°C pendant 3 heures et enfin à une température de 200 à 220°C jusqu'à ce que son poids soit invariable.

### Résultats :

Les revêtements sur substrats céramiques fabriqués selon les exemples 1 à 3 présentent une résistance thermochimique et une résistance à l'érosion satisfaisantes dans un courant de plasma simulant les conditions aérothermiques de rentrée dans l'atmosphère à une température de surface de 1500°C - on ne constate ni boursouflures, ni fissures, ni ablation.

L'émittance hémisphérique totale de ces revêtements, à des températures allant jusqu'à 1500°C, n'est pas inférieure à 0,8. Après traitement thermique dans un four de laboratoire à 1500°C pendant 3 heures, la surface des revêtements sur les substrats n'est pas modifiée et il ne se produit pas de fissures et pas d'écaillage.

De plus, les matériaux des substrats ne subissent pas de retrait.

## Revendications

1. Revêtement haute température, faiblement poreux, sur un substrat poreux à base de fibres céramiques constituées de composés réfractaires, caractérisé en ce que
- il est essentiellement constitué de silice (SiO₂) provenant d'un sol de silice, et d'alumine (Al₂O₃), de carbure de silicium (SiC) et de disiliciure de molybdène (MoSi2) résultant du mélange de particules de ces composés avec le sol de silice, dans une barbotine ;
- il a la composition en poids suivante :
| | |
|---|---|
| SiO₂ | 30,8 à 41,9 % |
| Al₂O₃ | 30,2 à 49,4 % |
| SiC | 4,0 à 16,3 % |
| MoSi₂ | 11,6 à 16,6 % ; |
- il présente une émittance non inférieure à 0,8 ; et
- il a une température de service allant jusqu'à 1500°C.

2. Procédé, pour l'obtention du revêtement selon la revendication 1, caractérisé en ce qu'il est mis en oeuvre sans étape de cuisson et comprend essentiellement les étapes consistant à :
a) préparer une barbotine constituée de 65 à 75 % en poids d'un sol de silice ayant une teneur de 20 à 50 % en poids de SiO₂, et de 25 à 35 % en poids d'un mélange de particules des composés réfractaires Al₂O₃, SiC et MoSi₂, dans les proportions en poids suivantes :
| | |
|---|---|
| Al₂O₃ | 52 à 71 % |
| SiC | 6 à 28 % |
| MoSi₂ | 20 à 25 % ; |
b) appliquer ladite barbotine sur le substrat poreux à base de fibres céramiques à revêtir ;
c) sécher la couche appliquée en plusieurs étapes, à la température ambiante (20 à 25°C environ), à une température de 90 à 100°C puis à une température de 200 à 220°C jusqu'à l'obtention d'un poids constant du substrat revêtu.

3. Procédé selon la revendication 2, caractérisé en ce que les composants de la barbotine Al₂O₃, SiC et MoSi₂ sont ajoutés sous forme de trichites ou whiskers, de fibres, de poudres ou de leurs mélanges.

4. Procédé selon la revendication 2 ou 3, caractérisé en ce que le substrat est formé de céramique fibreuse à haute porosité, à base d'oxydes de Si, Al, Zr, de carbure de silicium, de nitrure de silicium ou d'un mélange de tels composants.

5. Substrat formé de céramique fibreuse à haute porosité, à base d'oxydes de Si, Al, Zr, de carbure de silicium, de nitrure de silicium ou d'un mélange de tels composants, caractérisé en ce qu'il est revêtu par un revêtement haute température selon la revendication 1.

## Patentansprüche

1. Hochtemperaturüberzug geringer Porosität auf einem porösen Substrat auf Basis von aus hitzebeständigen Zusammensetzungen gebildeten keramischen Fasern,
dadurch gekennzeichnet, daß
- er sich im wesentlichen aus von einem Kieselsol stammender Kieselerde (SiO₂), aus Tonerde (Al₂O₃), aus Siliciumcarbid (SiC) und aus Molybdändisilicid (MoSi₂) zusammensetzt und aus Vermischen der Teilchen dieser Zusammensetzungen mit dem Kieselsol in einer Aufschlämmung hervorgeht;
- er die folgende Zusammensetzung in Gew.-% aufweist:
| | |
|---|---|
| SiO₂ | 30,8 bis 41,9 |
| Al₂O₃ | 30,2 bis 49,4 |
| SiC | 4,0 bis 16,3 |
| MoSi₂ | 11,6 bis 16,6 |
- er eine spezifische Ausstrahlung nicht unter 0,8 aufweist;
- er eine Betriebstemperatur bis 1500°C aushält.

2. Verfahren zur Herstellung des Überzugs gemäß Anspruch 1, dadurch gekennzeichnet daß es ohne Einbrennschritt erfolgt und im wesentlichen die Schritte umfaßt:
a) Zubereitung einer Aufschlämmung aus 65 bis 75 Gew.-% eines Kieselsols mit einem Gehalt von 20 bis 50 Gew.-% SiO₂, sowie 25 bis 35 Gew.-% einer Mischung aus Teilchen der hitzebeständigen Zusammensetzungen Al₂O₃, SiC und MoSi₂ in den folgenden Gewichtsverhältnissen:
| | |
|---|---|
| Al₂O₃ | 52 bis 51 % |
| SiC | 6 bis 28 % |
| MoSi₂ | 20 bis 25 % ; |
b) Auftragen dieser Aufschlämmung auf das zu überziehende poröse Substrat auf Basis keramischer Fasern;
c) Trocknen der aufgetragenen Schicht in mehreren Schritten, bei Zimmertemperatur (ca. 20 - 25°C), bei einer Temperatur von 90 bis 100°C und sodann bei einer Temperatur von 200 bis 220°C bis Gewichtskonstanz des mit dem Überzug versehenen Substrats erreicht ist.

3. Verfahren nach Anspruch 2, dadurch gekennzeichnet, daß die Bestandteile Al₂O₃, SiC und MoSi₂ der Aufschlämmung in Form von Trichiten oder Whisker, Fasern, Pulvern oder Mischungen davon zugesetzt werden.

4. Verfahren nach Anspruch 2 oder 3, dadurch gekennzeichnet, daß das Substrat aus Faserkeramik hoher Porosität auf Basis der Oxide von Si, Al, Zr, Siliciumcarbid, Siliciumnitrid oder einer Mischung dieser Bestandteile gebildet ist.

5. Aus Faserkeramik hoher Porosität gebildetes Substrat auf Basis der Oxide von Si, Al, Zr, Siliciumcarbid, Siliciumnitrid oder einer Mischung dieser Bestandteile, dadurch gekennzeichnet, daß es mit einem Hochtemperaturüberzug nach Anspruch 1 überzogen ist.

## Claims

1. A low porosity high temperature coating on a porous substrate based on ceramic fibers constituted by refractory compounds, which
- is essentially constituted by silica (SiO₂) from a silica sol, and by alumina (Al₂O₃), silicon carbide (SiC) and molybdenum disilicide (MoSi₂) resulting from the mixing of particles of these compounds with the silica sol, in a slurry;
- has a weight composition as follows:
| | |
|---|---|
| SiO₂ | 30.8 to 41.9 % |
| Al₂O₃ | 30.2 to 49.4 % |
| SiC | 4.0 to 16.3 % |
| MoSi₂ | 11.6 to 16.6 %; |
- has an emissivity of not less than 0.8; and
- has an operating temperature of up to 1500°C.

2. A process for producing the coating according to claim 1, which is carried out without a firing step and essentially comprises the steps of:
a) preparing a slurry composed of 65 to 75 weight % of a silica sol having a content of 20 to 50 weight % of SiO₂, and of 25 to 35 weight % of a mixture of particles of the refractory compounds Al₂O₃, SiC and MoSi₂, in the following weight proportions:
| | |
|---|---|
| Al₂O₃ | 52 to 71% |
| SiC | 6 to 28% |
| MoSi₂ | 20 to 25%; |
b) applying the said slurry to the ceramic fiber based porous substrate to be coated;
c) drying the layer applied in several steps, at ambient temperature (about 20 to 25°C), at a temperature of 90 to 100°C, and then at a temperature of 200 to 220°C until a constant weight is obtained for the coated substrate.

3. The process according to claim 2, wherein the Al₂O₃, SiC and MoSi₂ components of the slurry are added in the form of whiskers, fibers, powders, or mixtures thereof.

4. A process according to claim 2 or 3, wherein the substrate is formed of fibrous highly porous ceramic based on Si, Al, Zr oxides, silicon carbide, silicon nitride or a mixture thereof.

5. Substrate formed of highly porous fibrous ceramic of Si, Al, Zr oxides, silicon carbide, silicon nitride or a mixture of such components, wherein it is coated with a high temperature coating according to claim 1.
